# EUROPÄISCHE PATENTSCHRIFT

(11) **EP 3 514 348 B1**
(45) Veröffentlichungstag und Bekanntmachung des Hinweises auf die Patenterteilung: **19.05.2021**
(21) Anmeldenummer: 19150728.4
(22) Anmeldetag: 08.01.2019
(51) Int. Cl.: F02B 75/04, F16C 7/06

(54) **PLEUEL FÜR EINE BRENNKRAFTMASCHINE MIT VARIABLER VERDICHTUNG**
CONNECTING ROD FOR A COMBUSTION ENGINE WITH VARIABLE COMPRESSION
BIELLE POUR UN MOTEUR À COMBUSTION INTERNE À COMPRESSION VARIABLE

(30) Priorität: 23.01.2018 DE 102018101440; 24.09.2018 DE 102018123426
(43) Veröffentlichungstag der Anmeldung: 24.07.2019
(73) Patentinhaber: ECO Holding 1 GmbH, 97828 Marktheidenfeld (DE)
(72) Erfinder: Mudra, Alexander, 97828 Marktheidenfeld (DE); Huber, David, 63739 Aschaffenburg (DE); Schulze, Dietmar, 35516 Münzenberg (DE)

(56) Entgegenhaltungen:
- DE-A1-102015 103 202
- DE-A1-102015 109 922
- DE-A1-102015 213 277
- DE-A1-102015 213 281

## Beschreibung

### Technisches Gebiet

Die Erfindung betrifft einen Pleuel für eine Brennkraftmaschine mit variabler Verdichtung, sowie eine Brennkraftmaschine mit variabler Verdichtung mit einem Pleuel.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulischen Umschaltventilen eine Exzenter-Verstelleinrichtung eines Pleuels betätigen.

Die DE 10 2013 014 090 A1 beschreibt beispielsweise den zweiteiligen Aufbau eines Exzenterhebels, dessen Exzenterhebelsegmente mittels Verbindungsbolzen verbunden sind.

### Offenbarung der Erfindung

Eine Aufgabe der Erfindung ist es, einen verbesserten, kostengünstigen Pleuel für eine Brennkraftmaschine mit variabler Verdichtung zu schaffen, welches prozesssicher herzustellen ist.

Eine weitere Aufgabe ist es, eine Brennkraftmaschine mit variabler Verdichtung mit einem solchen Pleuel zu schaffen.

Die vorgenannten Aufgaben werden nach einem Aspekt der Erfindung gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung vorgeschlagen, mit einer Exzenter-Verstelleinrichtung zur Verstellung einer effektiven Pleuelstangenlänge. Die Exzenter-Verstelleinrichtung weist einen mit einem Exzenterhebel zusammenwirkenden Exzenter und an dem Exzenterhebel angreifende Stützstangen auf.

Erfindungsgemäß ist der Exzenterhebel einstückig als Stanzbiegeteil oder mittels eines Kaltmassivumformverfahrens hergestellt ausgebildet.

Durch die einstückige Herstellung des Exzenterhebels wird ein sehr wirtschaftliches Fertigungsverfahren der gesamten Pleuelbaugruppe begünstigt. Die Herstellung des Exzenterhebels kann vorteilhaft in ähnlicher Weise wie die Herstellung eines Rollenschlepphebels einer Ventilbaugruppe einer Brennkraftmaschine erfolgen. Dabei kann beim Umformen des Stanzbiegeteils zweckmäßigerweise ein schmiedeähnlicher Prozess mit Fließen des umgeformten Materials erfolgen. Auch ein Kaltmassivumformverfahren ist so zur Herstellung des Exzenterhebels vorteilhaft einsetzbar.

Der Exzenterhebel kann dann an den Exzenter angeschweißt werden, wobei der Exzenterhebel den Exzenter ganz oder nur teilweise auf einem Kreisbogenabschnitt umschließen kann. Eine solche teilumschlossene Anbindung des Exzenterhebels an den Exzenter hat sich als besonders günstig erwiesen, da so das Material und damit das Gewicht des Exzenterhebels entscheidend reduziert werden kann. Die Anbindung des Exzenters kann in beiden Fällen beispielsweise durch Anschweißen erfolgen, wobei es sich im Fall eines teilumschlossenen Exzenters als besonders günstig erweist, wenn der Exzenterhebel im Bereich der Enden der Schweißnaht mit geringerer Materialstärke als im übrigen Teil des Exzenterhebels ausgebildet ist. Auf diese Weise kann eine Kraft, die beim Betrieb des Pleuels in die Schweißnaht eingeleitet wird, auf vorteilhafte Weise reduziert werden. Dadurch lässt sich das Risiko einer Rissbildung im Bereich der Anbindung zwischen Exzenter und Exzenterhebel minimieren.

Der Exzenterhebel kann so günstigerweise als Stanzbiegeteil hergestellt werden, indem zunächst ein entsprechend geometrisches Muster des Exzenterhebels aus Blech ausgestanzt wird. Dieses ebene Teil kann dann an den vorgesehenen Stellen mit entsprechenden Radien umgebogen werden, sodass es die gewünschte Form des Exzenterhebels annimmt. Bearbeitungen wie das Anbringen von Bohrungen oder besonderen Formen wie Aufnahmebereiche für die Gelenke von Stützstangen können noch im Ausgangszustand als flaches Blech oder auch nach dem Umformprozess durchgeführt werden. Auf diese Weise lässt sich der Exzenterhebel mit der gewünschten Toleranzlage auf kostengünstige Weise fertigen.

Auch mit einem Kaltmassivumformverfahren kann der Exzenterhebel als einstückiges Schmiedeteil in einfacher und kostengünstiger Weise hergestellt werden.

Als Material des Exzenterhebels kann beispielsweise hochfester Vergütungsstahl zum Einsatz kommen, wobei der Vergütungsprozess vor oder nach dem Umformen erfolgen kann.

Gemäß einer vorteilhaften Ausgestaltung kann wenigstens ein Bereich des Exzenterhebels wenigstens eine Richtungsänderung im Umformprozess erfahren haben. Insbesondere können zwei Endbereiche der ausgestanzten Form eines Blechteils in geeigneter Weise umgebogen werden, um beispielsweise Seitenwangen eines Exzenterhebels darzustellen.

Gemäß einer vorteilhaften Ausgestaltung kann wenigstens ein Bereich des Exzenterhebels wenigstens zwei Umformradien, insbesondere in schräg zueinander liegenden Ebenen, aufweisen. Dadurch lassen sich auch komplexere Formen eines Exzenterhebels aus einem einfachen flach ausgestanzten Blechteil ausbilden. Beispielsweise lassen sich erst Seitenwangen eines Exzenterhebels mit einem Umformradius aufstellen. Danach lassen sich dann Kröpfungen vorsehen, um damit beispielsweise ein Kugelgelenk einer Stützstange aufnehmen und halten zu können.

Gemäß einer vorteilhaften Ausgestaltung kann der Exzenterhebel wenigstens eine Verliersicherung aufweisen, welche die Stützstangen gegen ein Herausfallen aus dem Exzenterhebel sichert. Insbesondere kann der Exzenterhebel Bohrungen aufweisen, welche einen Sicherungsstift aufnehmen können, der die Stützstangen gegen ein Herausfallen aus dem Gelenkbereich sichern kann. Alternativ können Bereiche des Exzenterhebels nach Einsetzen des Kugelgelenks einer Stützstange so gecrimpt oder gekröpft werden, dass das Kugelgelenk gegen ein Herausrutschen aus dem Gelenkbereich gesichert ist.

Erfindungsgemäß weist der Exzenterhebel Gelenkaufnahmen rauf, in welche Kugelkopfgelenke der Stützstangen eingreifen. Günstigerweise können Gelenkaufnahmen in den einstückigen Exzenterhebel beispielsweise durch Prägen oder Schmieden so eingebracht werden, dass damit ein Kugelkopfgelenk der Stützstange aufgenommen werden kann. Auf diese Weise ist kein zusätzliches Bauteil als Gelenkaufnahme erforderlich, was die Herstellung des Exzenterhebels vereinfacht und kostengünstig realisierbar macht.

Gemäß einer vorteilhaften Ausgestaltung können die Gelenkaufnahmen als Prägung in dem Exzenterhebel ausgebildet sein. Insbesondere ein Stanzbiegeteil kann auch in einfacher Weise so geprägt werden, dass damit eine Gelenkaufnahme umgesetzt werden kann, welche beispielsweise ein Kugelkopfgelenk der Stützstange aufnehmen kann. Gerade Blechteile, wie sie für Stanzbiegeteile verwendet werden, eignen sich in besonderer Weise für einen solchen Prägeprozess.

Gemäß einer vorteilhaften Ausgestaltung können die Gelenkaufnahmen als Kugelkalotten ausgebildet sein. Günstigerweise werden als Gelenke, mit denen die Stützstangen mit dem Exzenterhebel beweglich verbunden werden, Kugelkopfgelenke eingesetzt. Solche Kugelkopfgelenke können in Gelenkaufnahmen mit Kugelkalottenform geeignet aufgenommen werden. Damit ist die freie Beweglichkeit der Stützstange in mehrere Raumrichtungen günstig realisierbar.

Gemäß einer vorteilhaften Ausgestaltung kann die wenigstens eine Verliersicherung umgecrimpte Laschen umfassen, welche die Kugelkopfgelenke der Stützstangen wenigstens teilweise umschließen. Auf diese Weise können die Kugelkopfgelenke in einer Art Käfig von den umgecrimpten Laschen zumindest bereichsweise umschlossen sein, so dass die Stützstangen aus der Aufnahme nicht herausfallen können. Das Umcrimpen kann günstigerweise nach dem Einsetzen der Kugelkopfgelenke in die entsprechenden Aufnahmen des Exzenterhebels erfolgen.

Gemäß einer vorteilhaften Ausgestaltung kann die wenigstens eine Verliersicherung gekröpfte Laschen umfassen, in welche die Kugelkopfgelenke der Stützstangen einsetzbar sind. Alternativ können auch bereits gekröpfte Laschen vorgesehen sein, die wenigstens bereichsweise die Kugelkopfgelenke der Stützstangen so umschließen, dass die Stützstangen aus der Aufnahme nicht herausfallen können. Die Kröpfung wird zweckmäßigerweise so vorgesehen, dass die Kugelkopfgelenke geeignet in die Aufnahmen eingesetzt werden können, wenn eine entsprechende Öffnung in der Kröpfung der Laschen angeordnet ist.

Gemäß einer vorteilhaften Ausgestaltung kann der Exzenterhebel Ausnehmungen zur Gewichts- und Spannungsreduzierung aufweisen. Zweckmäßigerweise kann der Exzenterhebel so ausgelegt sein, dass die mechanische Festigkeit vorhanden ist, und Material an den Stellen, die nicht zur Festigkeit beitragen, eingespart wird. Auf diese Weise kann ein vorteilhaft leichter Exzenterhebel vorgesehen sein, der nicht nur Gewicht des Pleuels spart, sondern auch auf Grund des geringeren Trägheitsmoments auch schneller bewegt werden kann.

Gemäß einer vorteilhaften Ausgestaltung können ein Pleuellagerauge und der Exzenter erste Teilbereiche mit ersten Stirnflächenkonturen und zweite Teilbereiche mit zweiten Stirnflächenkonturen aufweisen, wobei der Exzenterhebel den Exzenter ausschließlich in dem ersten Teilbereich des Exzenters umschließt. Die Anbindung des Exzenters nur im ersten Teilbereich an den Exzenterhebel vereinfacht die Montage des Pleuels. Außerdem können so auch Kosten der Fertigung der Exzenter-Verstelleinrichtung auf Grund des geringeren Materialeinsatzes und der Reduzierung der Fertigungsprozesse verringert werden.

Erfindungsgemäß weist der Exzenterhebel zueinander parallele Verbindungsabschnitte auf, welche mit dem Exzenter drehfest verbunden sind. Die parallelen Verbindungsabschnitte begünstigen eine stabile Auslegung des Exzenterhebels und tragen so zur Dauerfestigkeit der Exzenter-Verstelleinrichtung vorteilhaft bei.

Gemäß einer vorteilhaften Ausgestaltung können die Verbindungsabschnitte eine gekrümmte Innenfläche aufweisen, welche als ein Kreisbogensegment ausgebildet ist und welche den ersten Teilbereich umschließt. Dadurch kann ein Exzenter mit kreisförmiger Außenform zweckmäßig an den Exzenterhebel angebunden werden. Auf diese Weise kann auch eine günstige Kraftübertragung von dem Exzenterhebel auf den Exzenter stattfinden.

Gemäß einer vorteilhaften Ausgestaltung kann die Innenfläche einen Kreisbogenabschnitt umfassen, der höchstens halbkreisförmig ausgebildet ist. Die höchstens halbkreisförmige Bauform des Exzenterhebels begünstigt eine vorteilhafte Bauraumausnutzung im Pleuel und trägt zu einer günstigen Kraftübertragung von dem Exzenterhebel auf den Exzenter bei.

Gemäß einer vorteilhaften Ausgestaltung kann der Exzenterhebel entlang der Innenfläche mit dem Exzenter verschweißt vorgesehen sein. Die feste Anbindung des Exzenterhebels an den Exzenter kann zweckmäßigerweise über einen Schweißprozess erfolgen. Auf diese Weise können günstige Fertigungskosten mit einer vorteilhaften Dauerfestigkeit der Exzenter-Verstelleinrichtung kombiniert werden.

Nach einem weiteren Aspekt der Erfindung wird eine Brennkraftmaschine mit wenigstens einem Pleuel vorgeschlagen. Dabei kann vorteilhaft ein Pleuel wie vorstehend beschrieben verwendet werden, um auf günstige Weise eine Exzenter-Verstelleinrichtung zu realisieren sowie einen vorteilhaften Verbrennungsprozess und damit Kraftstoffverbrauch in der Brennkraftmaschine umzusetzen.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt.

### Es zeigen beispielhaft:

- Fig. 1: eine isometrische Ansicht eines bekannten Pleuels für eine Brennkraftmaschine mit variabler Verdichtung;
- Fig. 2: eine isometrische Ansicht eines Exzenterhebels nach einem Ausführungsbeispiel der Erfindung;
- Fig. 3: eine isometrische Ansicht von einer Unterseite des Exzenterhebels gemäß Fig. 2;
- Fig. 4: eine Seitenansicht des Exzenterhebels gemäß Fig. 2;
- Fig. 5: eine Frontansicht des Exzenterhebels gemäß Fig. 2;
- Fig. 6: eine Draufsicht des Exzenterhebels gemäß Fig. 2;
- Fig. 7: eine isometrische Ansicht eines Exzenterhebels nach einem weiteren Ausführungsbeispiel der Erfindung;
- Fig. 8: eine isometrische Ansicht des Exzenterhebels gemäß Fig. 7 von einer Unterseite;
- Fig. 9: eine Seitenansicht des Exzenterhebels gemäß Fig. 7;
- Fig. 10: eine Frontansicht des Exzenterhebels gemäß Fig. 7;
- Fig. 11: eine Draufsicht des Exzenterhebels gemäß Fig. 7;
- Fig. 12: eine isometrische Ansicht eines nicht erfindungsgemäßen Exzenterhebels;
- Fig. 13: eine Seitenansicht des Exzenterhebels gemäß Fig. 12;
- Fig. 14: eine Draufsicht von einer Unterseite des Exzenterhebels gemäß Fig. 12;
- Fig. 15: eine Draufsicht von einer Oberseite des Exzenterhebels gemäß Fig. 12;
- Fig. 16: eine Frontansicht aus der Richtung XVI des Exzenterhebels gemäß Fig. 13;
- Fig. 17: eine Frontansicht aus der Richtung XVII des Exzenterhebels gemäß Fig. 13;
- Fig. 18: eine Draufsicht auf den ausgestanzten Rohling eines Exzenterhebels gemäß Fig. 7;
- Fig. 19: eine isometrische Ansicht des ausgestanzten Rohlings gemäß Fig. 18;
- Fig. 20: eine Frontansicht des Rohlings gemäß Fig. 18 nach einem Biegeprozess;
- Fig. 21: eine Seitenansicht des Rohlings gemäß Fig. 18 nach dem Biegeprozess;
- Fig. 22: eine Draufsicht des Rohlings gemäß Fig. 18 nach dem Biegeprozess;
- Fig. 23: eine isometrische Ansicht des Rohlings gemäß Fig. 18 nach dem Biegeprozess;
- Fig. 24: eine Draufsicht von der Unterseite des Rohlings gemäß Fig. 18 nach dem Biegeprozess und anschließendem Prägen von Gelenkaufnahmen;
- Fig. 25: eine Seitenansicht des Rohlings gemäß Fig. 24;
- Fig. 26: eine Draufsicht des Rohlings gemäß Fig. 24;
- Fig. 27: eine isometrische Ansicht des Rohlings gemäß Fig. 24;
- Fig. 28: eine isometrische Ansicht von der Unterseite des Rohlings gemäß Fig. 24;
- Fig. 29: eine Frontansicht des Rohlings gemäß Fig. 24;
- Fig. 30: eine Draufsicht von der Unterseite des Rohlings nach einer Endbearbeitung;
- Fig. 31: eine Seitenansicht des Rohlings gemäß Fig. 30;
- Fig. 32: eine Draufsicht des Rohlings gemäß Fig. 30;
- Fig. 33: eine isometrische Ansicht des Rohlings gemäß Fig. 30;
- Fig. 34: eine isometrische Ansicht von der Unterseite des Rohlings gemäß Fig. 30; und
- Fig. 35: eine Frontansicht des Rohlings gemäß Fig. 30.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

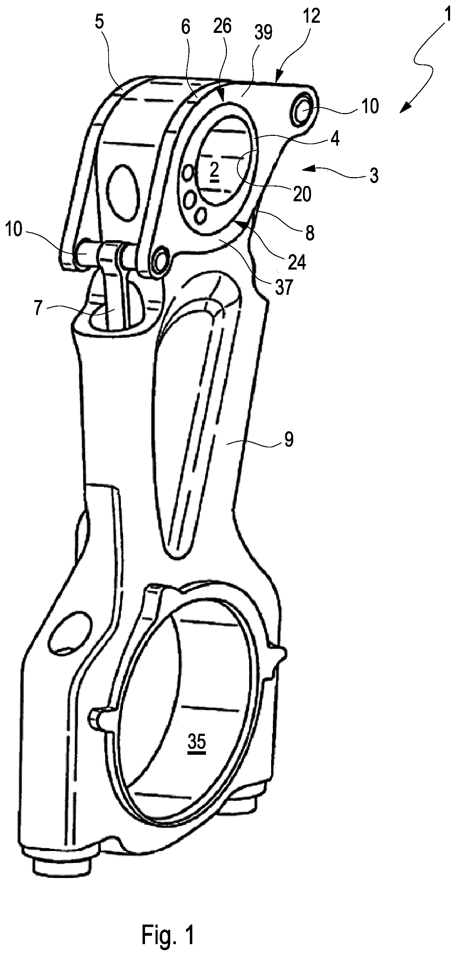

Fig. 1 zeigt einen bekannten Pleuel 1 für eine Brennkraftmaschine mit variabler Verdichtung. Der Pleuel 1 weist ein oberes Kolbenbolzenlagerauge 2 auf, in dem ein nicht näher dargestellter Kolbenbolzen eingesteckt ist. Dieser Kolbenbolzen ist in üblicher Weise fest in einen Brennraumkolben des Verbrennungsmotors eingesteckt. Das Kolbenbolzenlagerauge 2 ist mittels einer Exzenter-Verstelleinrichtung 3 um eine Schwenkachse schwenkbar, die parallel versetzt zur Längsachse des Kolbenbolzenlagerauges 2 liegt. Somit ist es möglich, das Kolbenbolzenlagerauge 2 in seinem Abstand zu einer Mittelachse eines Hublagers 35 zu verändern. Damit kann eine variable Verdichtung des Brennraums der Brennkraftmaschine verwirklicht werden.

Ein Verstellweg der Exzenter-Verstelleinrichtung 3, welche einen mehrteiligen Exzenterhebel 12 bestehend aus zwei Exzenterhebelsegmenten 5, 6 und einen mit dem Exzenterhebel 12 zusammenwirkenden, in einem Pleuellagerauge 20 des Exzenterhebels 12 gelagerten, Exzenter 4 aufweist, ist mittels eines nicht dargestellten Umschaltventils verstellbar.

Eine Verdrehung der verstellbaren Exzenter-Verstelleinrichtung 3 wird durch Einwirken von Massen- und Lastkräften der Brennkraftmaschine initiiert, die bei einem Arbeitstakt der Brennkraftmaschine auf die Exzenter-Verstelleinrichtung 3 wirken. Während eines Arbeitstaktes verändern sich die Wirkungsrichtungen der auf die Exzenter-Verstelleinrichtung 3 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte, nicht dargestellte Kolben unterstützt, bzw. die Kolben verhindern ein Rückstellen der Exzenter-Verstelleinrichtung 3 aufgrund variierender Kraftwirkungsrichtungen der auf die Exzenter-Verstelleinrichtung 3 wirkenden Kräfte.

Die Kolben sind jeweils in einer Zylinderbohrung eines Hydraulikzylinders eines Pleuelkörpers 9 des Pleuels 1 verschiebbar geführt und mit Stützstangen (Exzenterstangen) 7, 8 verbunden, welche ihrerseits mit den Exzenterhebelsegmenten 5, 6 mittels Zylinderbolzen 10 gelenkig verbunden sind.

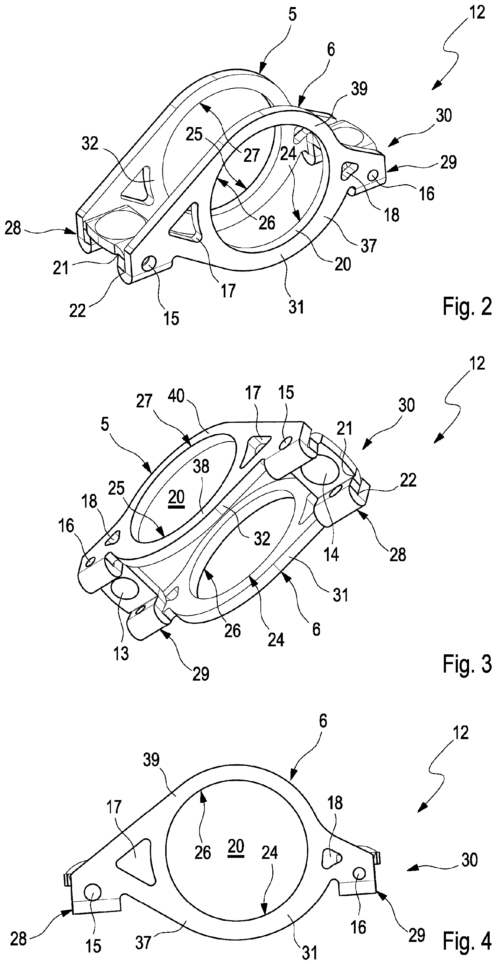

Den Figuren 2 bis 17 sind drei Ausführungsbeispiele eines Exzenterhebels 12 eines erfindungsgemäßen Pleuels 1 zu entnehmen.

Erfindungsgemäß ist vorgesehen, dass der Exzenterhebel 12 einstückig als Stanzbiegeteil oder mittels eines Kaltmassivumformverfahrens hergestellt ausgebildet ist.

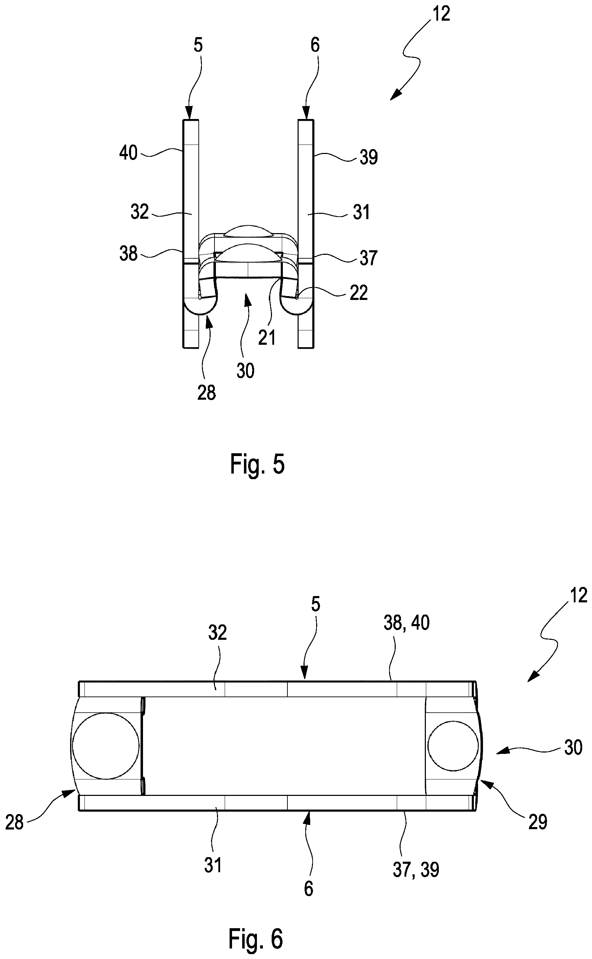

Figur 2 zeigt eine isometrische Ansicht eines Exzenterhebels 12 nach einem ersten Ausführungsbeispiel der Erfindung, während in Figur 3 eine isometrische Ansicht von einer Unterseite, in Figur 4 eine Seitenansicht des Exzenterhebels, in Figur 5 eine Frontansicht und in Figur 6 eine Draufsicht des Exzenterhebels dargestellt ist.

Die Figuren 2 bis 6 zeigen in verschiedenen Darstellungen den Exzenterhebel 12 als Stanzbiegeteil. Gelenkaufnahmen in Form von Kugelkalotten 13, 14, in welche Kugelkopfgelenke der Exzenterstangen 7, 8 eingreifen, sind ohne spanende Bearbeitung in den Exzenterhebel 12 geprägt und vorzugsweise kalibriert.

Der Exzenterhebel 12 weist eine Verliersicherung 30 auf, welche die Stützstangen 7, 8 gegen ein Herausfallen aus dem Exzenterhebel 12 sichert. Als Verliersicherung 30 kann, wie durch die Öffnungen 15, 16 angedeutet, eine Kolbenbolzenlösung vorgesehen sein. Alternativ können beispielsweise Laschen an den Exzenterhebel 12 angeformt sein, welche nach dem Einsetzen der Exzenterstangen 7, 8 umgebogen oder gecrimpt werden und dadurch jeweils den Kugelkopf der Exzenterstangen 7, 8 wenigstens teilweise umschließen. Als eine weitere Alternative kann die Verliersicherung 30 gekröpfte Laschen umfassen, in welche die Kugelkopfgelenke der Stützstangen 7, 8 eingesetzt werden können.

Wie beispielsweise aus Figur 2 und Figur 4 ersichtlich ist, kann der Exzenterhebel 12 Ausnehmungen 17, 18 zur Gewichts- und Spannungsreduzierung aufweisen.

Der Exzenterhebel 12 weist zueinander parallele Verbindungsabschnitte 31, 32 auf, welche mit dem (nicht dargestellten) Exzenter 4 drehfest verbunden sind. Das Exzenterhebelsegment 5 weist dabei den Verbindungsabschnitt 32 auf, während das Exzenterhebelsegment 6 den Verbindungsabschnitt 31 aufweist. Der Exzenter 4 kann beispielsweise mit dem Pleuellagerauge 20 des Exzenterhebels 12 verschweißt sein.

Bei dem Exzenterhebel 12 weisen das Pleuellagerauge 20 und der (nicht dargestellte) Exzenter 4 erste Teilbereiche 24, 25 mit ersten Stirnflächenkonturen 37, 38 und zweite Teilbereiche 26, 27 mit zweiten Stirnflächenkonturen 39, 40 auf, wobei der Exzenterhebel 3 den Exzenter 4 in den beiden Teilbereichen 24, 25, und 26, 27 des Exzenters 4 umschließt.

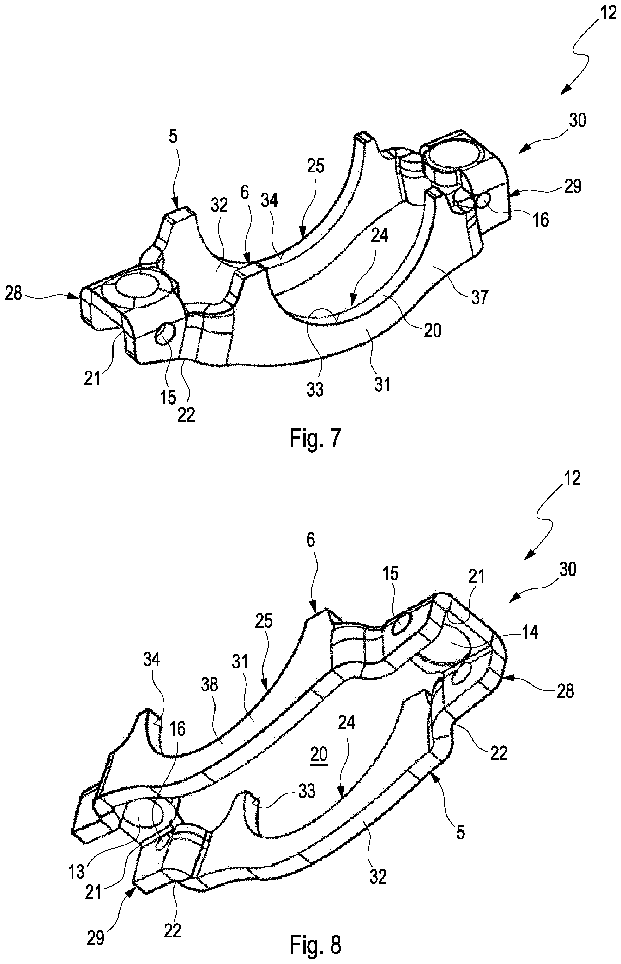

Den Figuren 7 bis 11 ist ein weiteres Ausführungsbeispiel eines einteiligen Exzenterhebels 12 zu entnehmen, welches als Stanzbiegeteil ausgebildet ist.

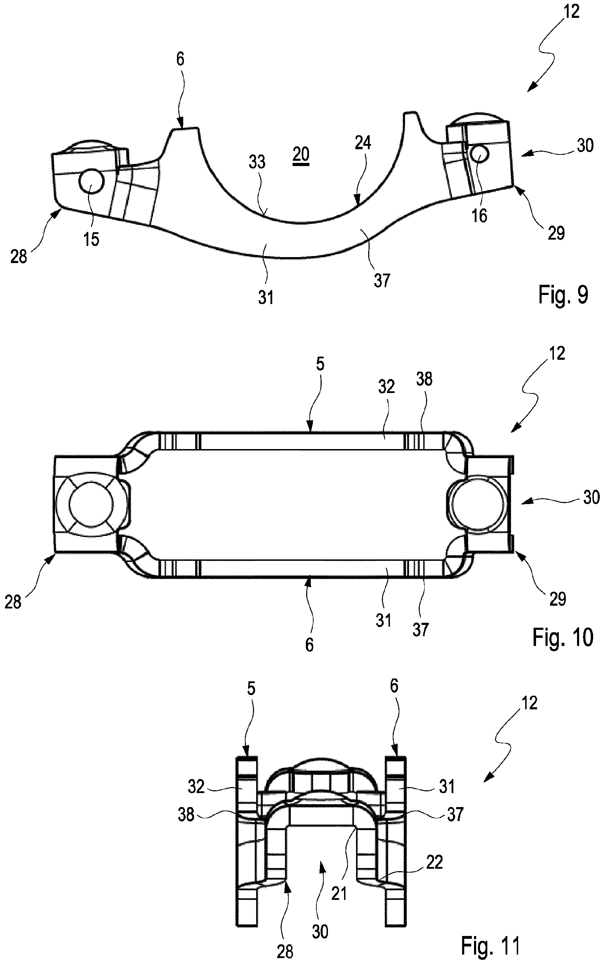

Figur 7 zeigt eine isometrische Ansicht des Exzenterhebels 12, während in Figur 8 eine isometrische Ansicht, in Figur 9 eine Seitenansicht, in Figur 10 eine Frontansicht und in Figur 11 eine Draufsicht des Exzenterhebels 12 gemäß Figur 7 dargestellt ist.

Im Unterschied zum vorher beschriebenen Ausführungsbeispiel ist vorgesehen, dass das Pleuellagerauge 20 und der (nicht dargestellte) Exzenter 4 erste Teilbereiche 24, 25 mit ersten Stirnflächenkonturen 37, 38 und zweite Teilbereiche 26, 27 mit zweiten Stirnflächenkonturen 39, 40 aufweisen, wobei der Exzenterhebel 3 den Exzenter 4 bei diesem Ausführungsbeispiel ausschließlich in dem ersten Teilbereich 24, 25 des Exzenters 4 umschließt.

Der Exzenterhebel 12 weist zueinander parallele Verbindungsabschnitte 31, 32 auf, welche mit dem (nicht dargestellten) Exzenter 4 drehfest verbunden sind. Die Verbindungsabschnitte 31, 32 weisen eine gekrümmte Innenfläche 33, 34 auf, welche als ein Kreisbogensegment ausgebildet ist und welche den ersten Teilbereich 24, 25 umschließt. Die Innenfläche 33, 34 umfasst einen Kreisbogenabschnitt, der höchstens halbkreisförmig ausgebildet ist. Der Exzenterhebel 3 kann zweckmäßigerweise entlang der Innenfläche 33, 34 mit dem Exzenter 4 verschweißt sein.

Vorteilhaft können die Verbindungsabschnitte 31, 32 im Bereich der Schweißnahtenden bei der Anbindung eines Exzenters 4 dünner als in anderen Bereichen der Verbindungsabschnitte 31, 32 ausgebildet sein, um so die Belastung der Schweißnaht durch Krafteinleitung im Endbereich gering zu halten. So kann das Risiko einer Rissbildung in der Schweißnaht reduziert werden.

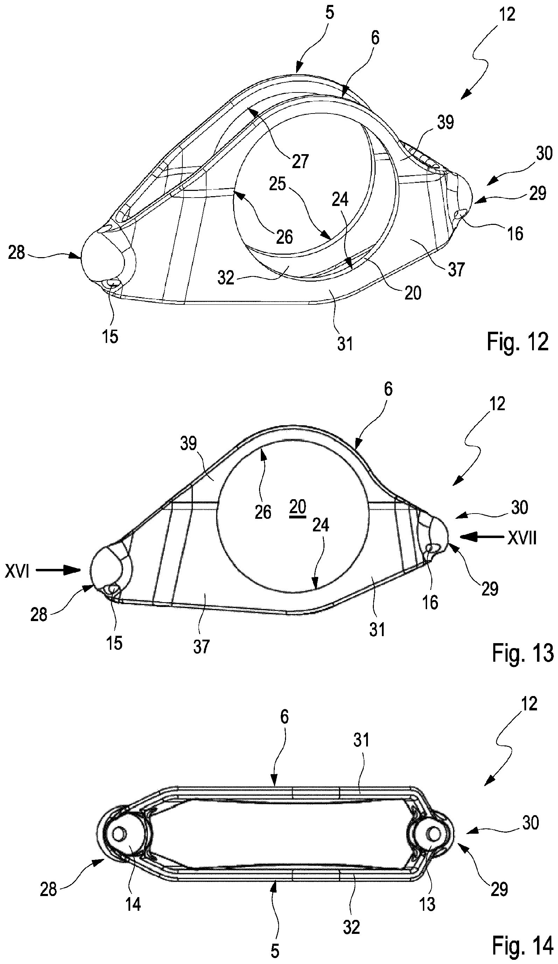

Ein nicht erfindungsgemäßes Beispiel ist den Figuren 12 bis 17 zu entnehmen, welches einen einteiligen Exzenterhebel 12 als Feingussteil zeigt.

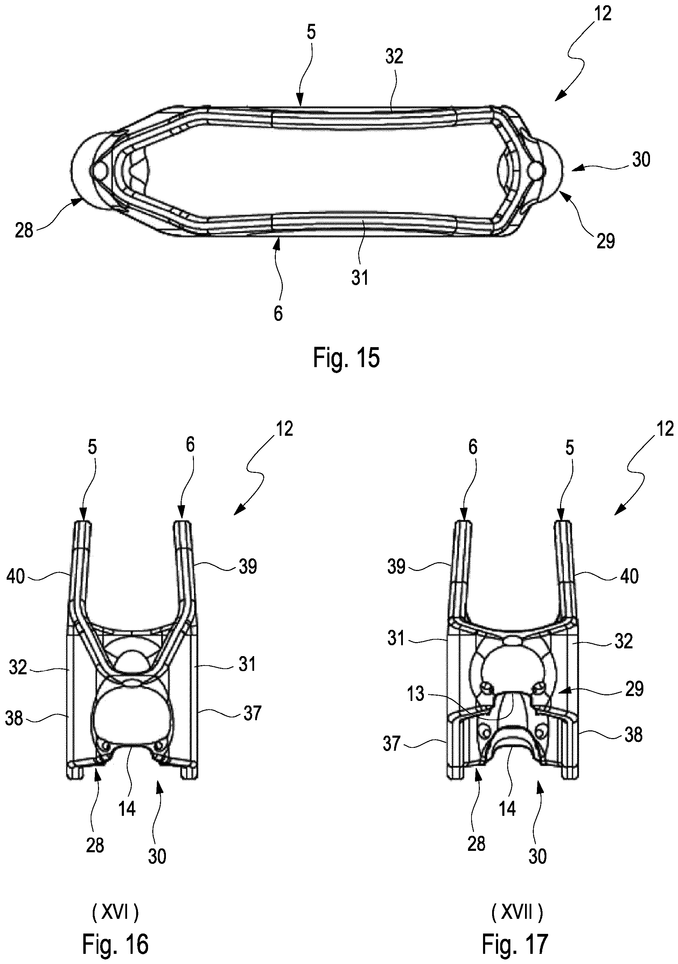

Figur 12 zeigt eine isometrische Ansicht des Exzenterhebels 12, während in Figur 13 eine Seitenansicht, in Figur 14 eine Draufsicht von einer Unterseite des Exzenterhebels 12, in Figur 15 eine Draufsicht von einer Oberseite des Exzenterhebels 12, in Figur 16 eine Frontansicht aus der Richtung XVI des Exzenterhebels 12 gemäß Figur 13, und in Figur 17 eine Frontansicht aus der Richtung XVII des Exzenterhebels gemäß Figur 13 dargestellt ist.

Auch bei diesem Beispiel ist der Exzenterhebel 12 als einstückig gefertigtes Bauteil realisiert. Wie ersichtlich ist, weist diese auch diese Ausführung einen nicht symmetrischen Exzenterhebel 12 auf, der hinsichtlich einwirkender Kräfte im Betrieb in einer Brennkraftmaschine strukturell optimiert ausgebildet ist. In dem Exzenterhebel 12 sind im Bereich der Gelenkaufnahmen 13, 14 (siehe Figur 14) quer liegende Bohrungen als Öffnungen 15, 16 zur Aufnahme von Verliersicherungen, beispielsweise in Form von Sicherungsstiften angebracht.

In der Draufsicht von der Unterseite in Figur 14 sind die beiden Gelenkaufnahmen 13, 14 erkennbar, welche auch in den beiden Frontansichten in den Figuren 16, 17 von verschiedenen Seiten des Exzenterhebels 12 wenigstens ersichtlich sind.

Alternative Ausführungen sehen vor, dass der einteilige Exzenterhebel 12 mittels eines Kaltmassivumformverfahrens hergestellt oder als laserausgeschnittenes und anschließend gebogenes Bauteil vorgesehen ist.

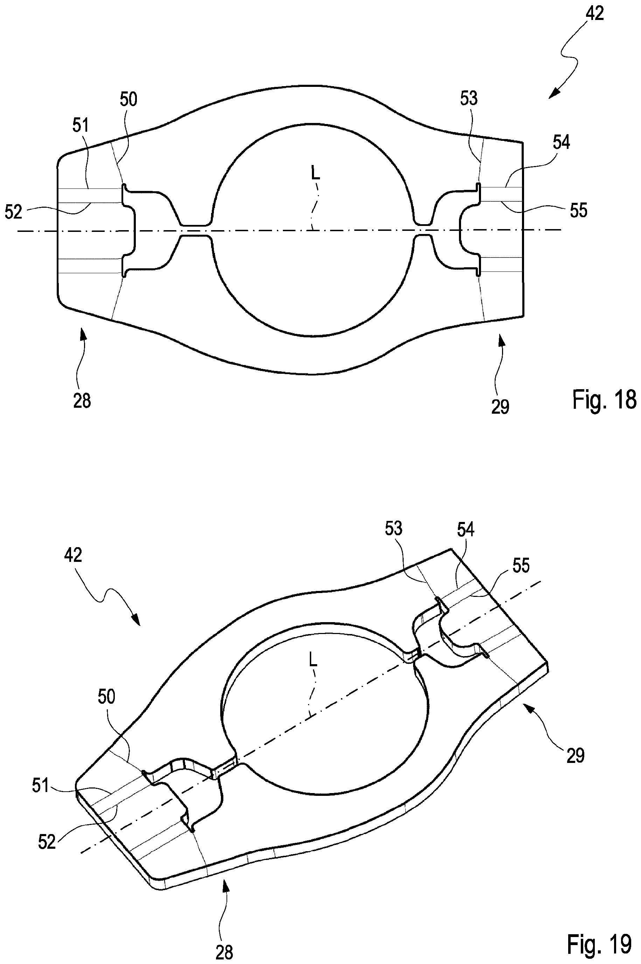

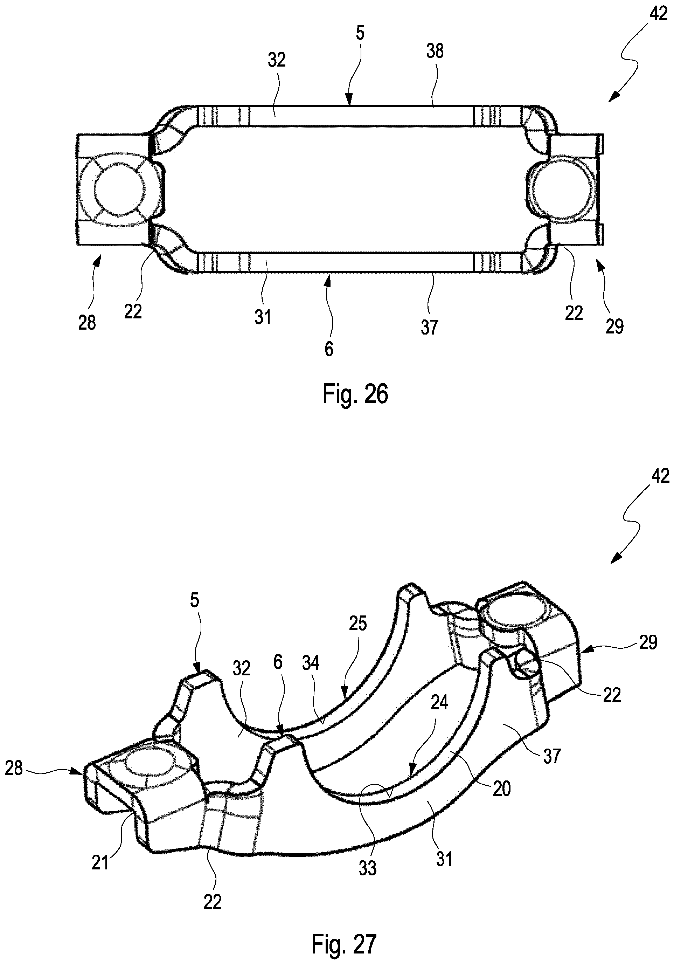

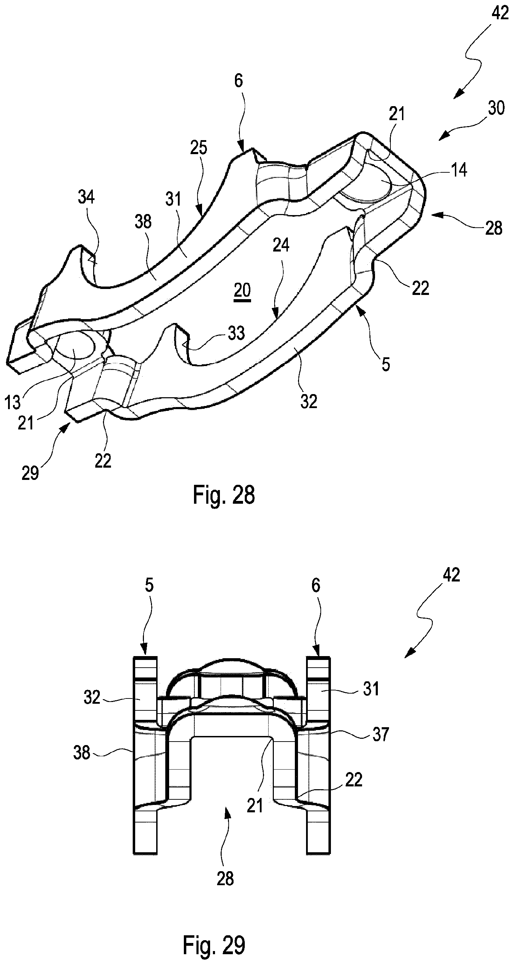

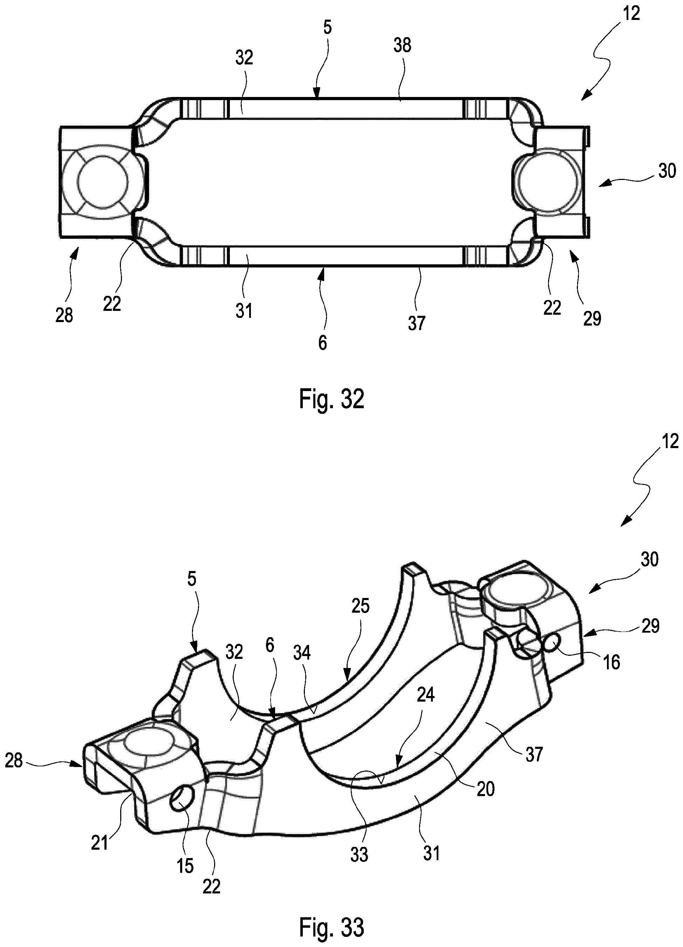

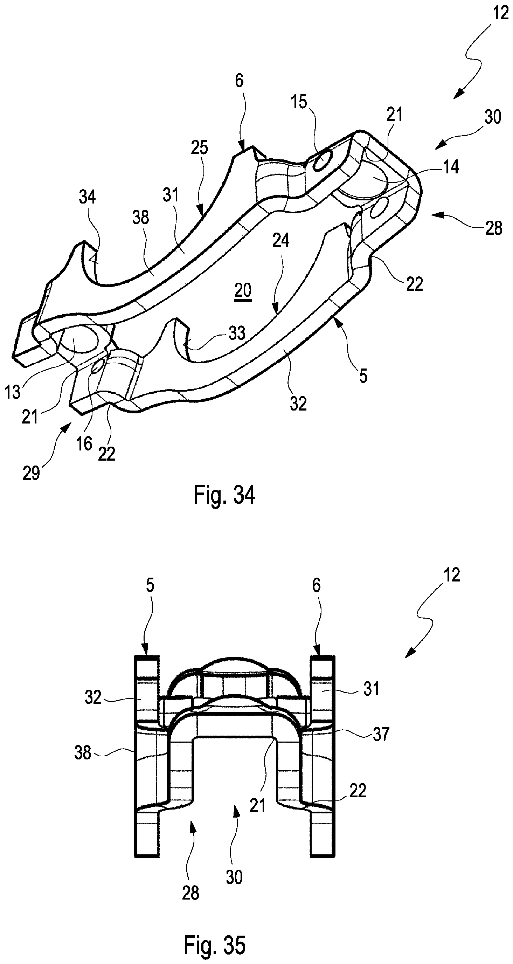

In den Figuren 18 bis 35 ist ein als Stanzbiegeteil gefertigter Exzenterhebel 12, welcher dem in den Figuren 7 bis 11 dargestellten Ausführungsbeispiel entspricht, in unterschiedlichen Fertigungsschritten dargestellt.

Figur 18 zeigt eine Draufsicht auf den ausgestanzten Rohling 42 eines Exzenterhebels 12 wie er beispielsweise in den Figuren 7 bis 11 in fertiggestelltem Zustand dargestellt ist. Der Rohling 42 kann beispielsweise ein ausgestanztes Blechteil sein. Als Material des Exzenterhebels 12 kann beispielsweise hochfester Vergütungsstahl zum Einsatz kommen, wobei der Vergütungsprozess vor oder nach dem Umformen erfolgen kann. Figur 19 zeigt eine isometrische Ansicht des ausgestanzten Rohlings 42.

Figur 18 zeigt den plan ausgestanzten Rohling 42 als Blechteil mit eingezeichneten Biegelinien 50, 51, 52, 53, 54, 55. Die Biegelinien 50, 51, 52, 53, 54, 55 sind jeweils symmetrisch zu einer Symmetrieachse L des Rohlings 42 angeordnet. Der Rohling 42 wird in nachfolgenden Biegeprozessen entlang dieser vorgezeichneten Biegelinien 50, 51, 52, 53, 54, 55 in die gewünschte Form des Exzenterhebels 12 gebogen. So erfährt wenigstens ein Bereich 28, 29 des Exzenterhebels 12 wenigstens eine Richtungsänderung im Umformprozess. Die Bereiche 28. 29 können jedoch wie in dem dargestellten Ausführungsbeispiel auch vorteilhaft mehrere Richtungsänderungen im Umformprozess erfahren. Die Bereiche 28, 29 des Exzenterhebels 12 weisen so wenigstens zwei verschiedene Umformradien 21, 22, insbesondere in schräg zueinander liegenden Ebenen, auf.

Die Biegelinien 50, 51, 52, 53, 54, 55 können zur Erleichterung des Biegeprozesses vorgeprägt ausgebildet sein.

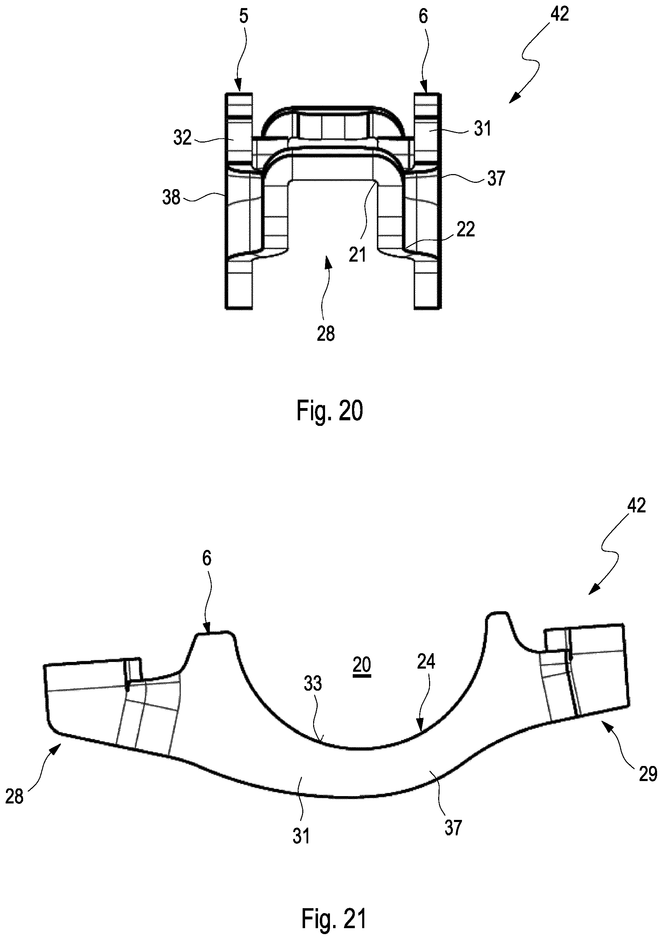

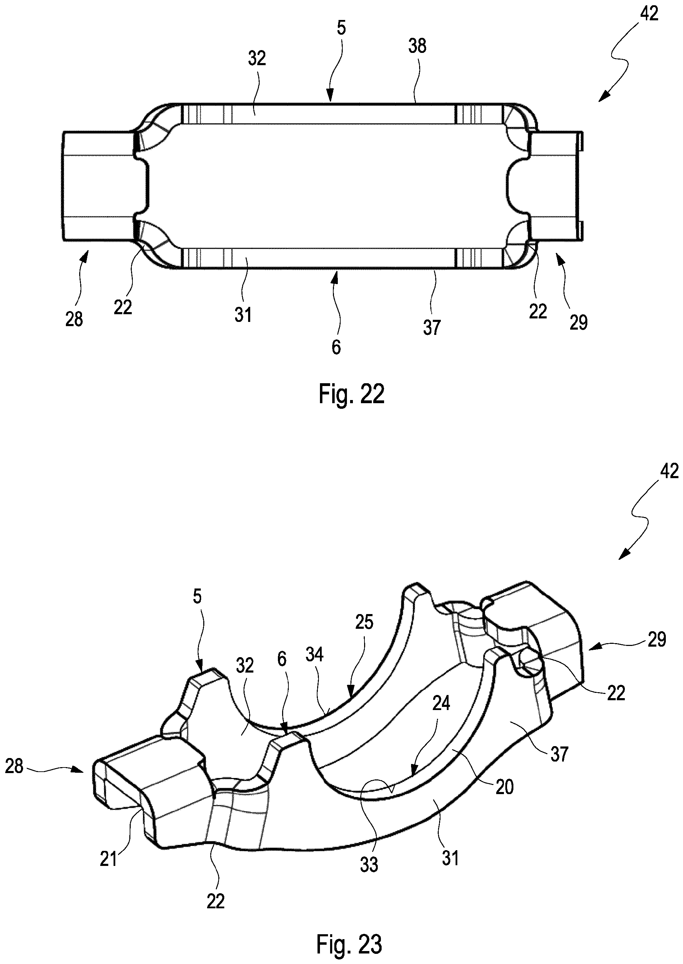

Figur 20 zeigt eine Frontansicht des Rohlings 42 gemäß Figur 18 nach dem Biegeprozess, während in Figur 21 eine Seitenansicht, in Figur 22 eine Draufsicht, und in Figur 23 eine isometrische Ansicht des Rohlings 42 nach dem Biegeprozess dargestellt ist.

Nach dem Biegeprozess ist der Rohling 42 bereits in die gewünschte Form des Exzenterhebels 12 gebracht und kann dann weiter bearbeitet werden.

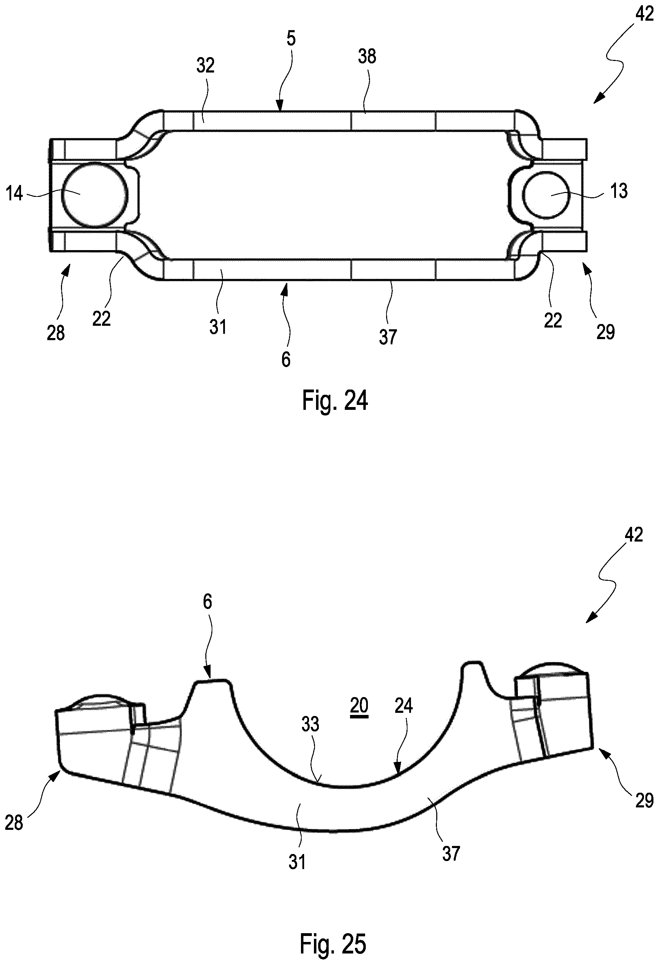

In Figur 24 ist weiter eine Draufsicht von der Unterseite des Rohlings 42 gemäß Figur 18 nach dem Biegeprozess und anschließendem Prägen von Gelenkaufnahmen dargestellt. Die Figuren 25 bis 29 zeigen verschiedene Ansichten des Rohlings 42 in diesem Zustand.

Die Gelenkaufnahmen 13, 14 sind von der Unterseite des Rohlings 42 her als Kugelkalotten in den Rohling 42 eingeprägt. In der Seitenansicht in Figur 25 sind deshalb die beiden Gelenkaufnahmen 13,14 als Erhebungen des Exzenterhebels 12 ersichtlich. Die Gelenkaufnahmen können als Lager für Kugelkopfgelenke von (nicht dargestellten) Stützstangen 7, 8 des Pleuels 1 verwendet werden.

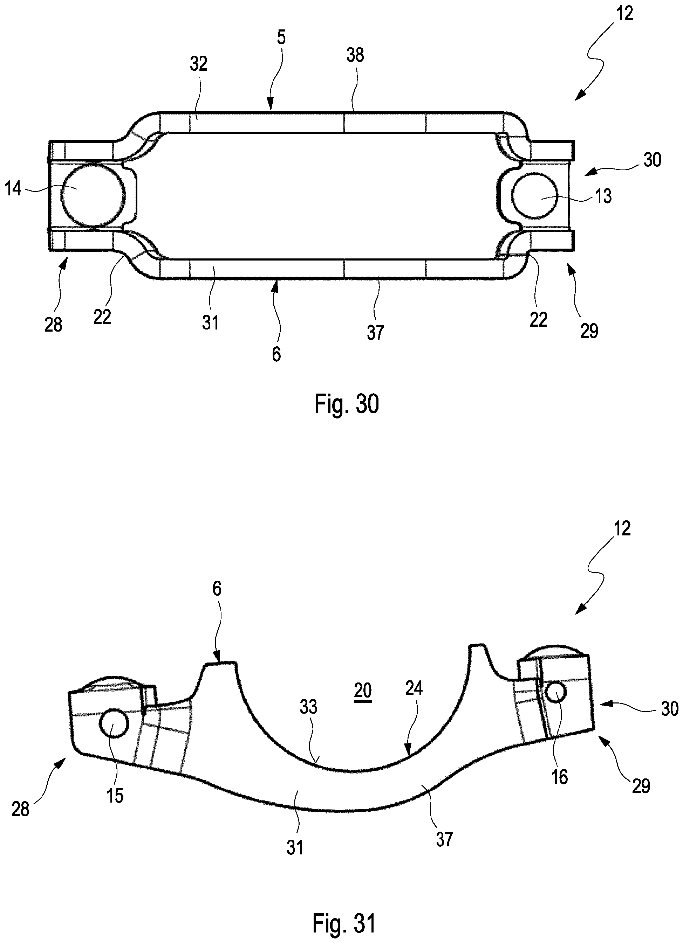

In den Figuren 30 bis 35 ist der fertig bearbeitete Exzenterhebel 12 gezeigt, welcher dem in den Figuren 7 bis 11 dargestellten Ausführungsbeispiel entspricht. In Figur 30 ist eine Draufsicht von der Unterseite des Exzenterhebels 12 gemäß Figur 18 nach einer Endbearbeitung dargestellt. Die Figuren 31 bis 35 zeigen verschiedene Ansichten des Exzenterhebels 12 nach der Endbearbeitung.

In den Exzenterhebel 12 sind im Bereich der Gelenkaufnahmen 13, 14 quer liegende Bohrungen als Öffnungen 15, 16 zur Aufnahme von Verliersicherungen, beispielsweise in Form von Sicherungsstiften angebracht. Alternativ kann eine Verliersicherung auch in Form einer umgecrimpten oder gekröpften Lasche im Bereich der Gelenkaufnahme 13, 14 vorgesehen sein, welche ein Kugelkopfgelenk einer Stützstange gegen ein Herausrutschen aus der Gelenkaufnahme sichern kann.

## Patentansprüche

1. Pleuel (1) für eine Brennkraftmaschine mit variabler Verdichtung, mit einer Exzenter-Verstelleinrichtung (3) zur Verstellung einer effektiven Pleuelstangenlänge, wobei die Exzenter-Verstelleinrichtung (3) einen mit einem einstückigen Exzenterhebel (12) zusammenwirkenden Exzenter (4) und an dem Exzenterhebel (12) angreifende Stützstangen (7, 8) aufweist, wobei der Exzenterhebel (12) Gelenkaufnahmen (13, 14) aufweist, in welche Kugelkopfgelenke der Stützstangen (7, 8) eingreifen, wobei der Exzenterhebel (12) zueinander parallele, durch Bereiche (28, 29) verbundene Verbindungsabschnitte (31, 32) aufweist, welche mit dem Exzenter (4) drehfest verbunden sind, und wobei die Gelenkaufnahmen (13, 14) in den Bereichen (28, 29) ausgebildet sind,
**dadurch gekennzeichnet, dass** der Exzenterhebel (12) einstückig als Stanzbiegeteil oder mittels eines Kaltmassivumformverfahrens hergestellt ausgebildet ist, wobei die Gelenkaufnahmen (13, 14) als Prägung in dem Exzenterhebel (12) ausgebildet sind.

2. Pleuel nach Anspruch 1, **dadurch gekennzeichnet, dass** wenigstens ein Bereich (28, 29) des Exzenterhebels (12) wenigstens eine Richtungsänderung im Umformprozess erfahren hat.

3. Pleuel nach Anspruch 1 oder 2, **dadurch gekennzeichnet, dass** wenigstens ein Bereich (28, 29) des Exzenterhebels (12) wenigstens zwei Umformradien (21, 22), insbesondere in schräg zueinander liegenden Ebenen, aufweist.

4. Pleuel nach einem der vorhergehenden Ansprüche, **dadurch gekennzeichnet, dass** der Exzenterhebel (12) wenigstens eine Verliersicherung (30) aufweist, welche die Stützstangen (7, 8) gegen ein Herausfallen aus dem Exzenterhebel (12) sichert.

5. Pleuel nach Anspruch einem der vorhergehenden Ansprüchen, **dadurch gekennzeichnet, dass** die Gelenkaufnahmen (13, 14) als Kugelkalotten ausgebildet sind.

6. Pleuel nach einem der Ansprüche 4 oder 5, **dadurch gekennzeichnet, dass** die wenigstens eine Verliersicherung (30) umgecrimpte Laschen umfasst, welche die Kugelkopfgelenke der Stützstangen (7, 8) wenigstens teilweise umschließen.

7. Pleuel nach einem der Ansprüche 4 bis 6, **dadurch gekennzeichnet, dass** die wenigstens eine Verliersicherung (30) gekröpfte Laschen umfasst, in welche die Kugelkopfgelenke der Stützstangen (7, 8) einsetzbar sind.

8. Pleuel nach einem der vorhergehenden Ansprüche, **dadurch gekennzeichnet, dass** der Exzenterhebel (12) Ausnehmungen (17, 18) zur Gewichts- und Spannungsreduzierung aufweist.

9. Pleuel nach einem der vorhergehenden Ansprüche, **dadurch gekennzeichnet, dass** ein Pleuellagerauge (20) und der Exzenter (4) erste Teilbereiche (24, 25) mit ersten Stirnflächenkonturen (37, 38) und zweite Teilbereiche (26, 27) mit zweiten Stirnflächenkonturen (39, 40) aufweisen, wobei der Exzenterhebel (3) den Exzenter (4) ausschließlich in dem ersten Teilbereich (24, 25) des Exzenters (4) umschließt.

10. Pleuel nach Anspruch 9, wobei die Verbindungsabschnitte (31, 32) eine gekrümmte Innenfläche (33, 34) aufweisen, welche als ein Kreisbogensegment ausgebildet ist und welche den ersten Teilbereich (24, 25) umschließt.

11. Pleuel nach Anspruch 10, wobei die Innenfläche (33, 34) einen Kreisbogenabschnitt umfasst, der höchstens halbkreisförmig ausgebildet ist.

12. Pleuel nach einem der Ansprüche 9 bis 11, wobei der Exzenterhebel (3) entlang der Innenfläche (33, 34) mit dem Exzenter (4) verschweißt vorgesehen ist.

13. Brennkraftmaschine mit wenigstens einem Pleuel (1) nach einem der vorhergehenden Ansprüche.

## Claims

1. Connecting rod (1) for an internal combustion engine with variable compression, having an eccentric adjustment device (3) for adjusting an effective connecting-rod length, wherein the eccentric adjustment device (3) has an eccentric (4), which interacts with a unipartite eccentric lever (12), and support rods (7, 8), which engage on the eccentric lever (12), wherein the eccentric lever (12) has joint receptacles (13, 14) into which ball joints of the support rods (7, 8) engage, wherein the eccentric lever (12) has mutually parallel connecting sections (31, 32) which are connected by regions (28, 29) and which are connected rotationally conjointly to the eccentric (4), and wherein the joint receptacles (13, 14) are formed in the regions (28, 29),
**characterized in that** the eccentric lever (12) is produced in unipartite form as a punched and bent part or by means of a cold bulk deformation process, wherein the joint receptacles (13, 14) are formed as embossments in the eccentric lever (12).

2. Connecting rod according to Claim 1, **characterized in that** at least one region (28, 29) of the eccentric lever (12) has undergone at least one change in direction in the deformation process.

3. Connecting rod according to Claim 1 or 2, **characterized in that** at least one region (28, 29) of the eccentric lever (12) has at least two deformation radii (21, 22), in particular in planes which are oblique with respect to one another.

4. Connecting rod according to any of the preceding claims, **characterized in that** the eccentric lever (12) has at least one captive retention means (30) which secures the support rods (7, 8) against falling out of the eccentric lever (12).

5. Connecting rod according to Claim any of the preceding claims, **characterized in that** the joint receptacles (13, 14) are in the form of spherical segments.

6. Connecting rod according to either of Claims 4 and 5, **characterized in that** the at least one captive retention means (30) has crimped lugs which at least partially enclose the ball joints of the support rods (7, 8).

7. Connecting rod according to any of Claims 4 to 6, **characterized in that** the at least one captive retention means (30) has cranked lugs into which the ball joints of the support rods (7, 8) can be inserted.

8. Connecting rod according to any of the preceding claims, **characterized in that** the eccentric lever (12) has recesses (17, 18) for weight and stress reduction..

9. Connecting rod according to any of the preceding claims, **characterized in that** a connecting-rod bearing eye (20) and the eccentric (4) have first subregions (24, 25) with first end surface contours (37, 38) and second subregions (26, 27) with second end surface contours (39, 40), wherein the eccentric lever (3) encloses the eccentric (4) exclusively in the first subregion (24, 25) of the eccentric (4).

10. Connecting rod according to Claim 9, wherein the connecting sections (31, 32) have a curved inner surface (33, 34) which is in the form of a circular arc segment and which encloses the first subregion (24, 25).

11. Connecting rod according to Claim 10, wherein the inner surface (33, 34) comprises a circular arc section which is of at most semicircular form.

12. Connecting rod according to any of Claims 9 to 11, wherein the eccentric lever (3) is provided so as to be welded to the eccentric (4) along the inner surface (33, 34).

13. Internal combustion engine having at least one connecting rod (1) according to any of the preceding claims.

## Revendications

1. Bielle (1) pour un moteur à combustion interne à compression variable, comportant un dispositif de réglage excentrique (3) servant au réglage d'une longueur de bielle effective, le dispositif de réglage excentrique (3) comportant un excentrique (4) coopérant avec un levier d'excentrique (12) d'une seule pièce et des tiges de support (7, 8) venant en prise avec le levier d'excentrique (12), le levier d'excentrique (12) comprenant des logements d'articulation (13, 14) dans lesquels viennent en prise des articulations à rotule des tiges de support (7, 8), le levier d'excentrique (12) comprenant des parties de liaison (31, 32) parallèles l'une à l'autre et reliées par des régions (28, 29), lesquelles parties de liaison sont reliées de manière solidaire en rotation à l'excentrique (4), et les logements d'articulation (13, 14) étant réalisés dans les régions (28, 29),
**caractérisée en ce que** le levier d'excentrique (12) est réalisé de manière fabriqué d'une seule pièce comme pièce estampée pliée ou à l'aide d'un procédé de façonnage de pièces massives à froid, les logements d'articulation (13, 14) étant réalisés sous forme de gaufrage dans le levier d'excentrique (12).

2. Bielle selon la revendication 1, **caractérisée en ce qu'**au moins une région (28, 29) du levier d'excentrique (12) a subi au moins un changement de direction dans le processus de façonnage.

3. Bielle selon la revendication 1 ou 2, **caractérisée en ce qu'**au moins une région (28, 29) du levier d'excentrique (12) comprend au moins deux rayons de façonnage (21, 22), en particulier dans des plans situés en biais l'un par rapport à l'autre.

4. Bielle selon l'une des revendications précédentes, **caractérisée en ce que** le levier d'excentrique (12) comprend au moins une fixation anti-perte (30), laquelle fixe les tiges de support (7, 8) de manière à les empêcher de tomber du levier d'excentrique (12).

5. Bielle selon la revendication l'une des revendications précédentes, **caractérisée en ce que** les logements d'articulation (13, 14) sont réalisés comme calottes sphériques.

6. Bielle selon l'une des revendications 4 et 5, **caractérisée en ce que** l'au moins une fixation anti-perte (30) comporte des languettes serties qui entourent au moins partiellement les articulations à rotule des tiges de support (7, 8).

7. Bielle selon l'une des revendications 4 à 6, **caractérisée en ce que** l'au moins une fixation anti-perte (30) comporte des languettes coudées dans lesquelles les articulations à rotule des languettes de support (7, 8) peuvent être insérées.

8. Bielle selon l'une des revendications précédentes, **caractérisée en ce que** le levier d'excentrique (12) comprend des évidements (17, 18) pour la réduction de poids et de contraintes.

9. Bielle selon l'une des revendications précédentes, **caractérisée en ce qu'**un œil de palier de bielle (20) et l'excentrique (4) comprennent des premières régions partielles (24, 25) dotées de premiers contours de surface frontale (37, 38) et des deuxièmes régions partielles (26, 27) dotées de deuxièmes contours de surface frontale (39, 40), le levier d'excentrique (3) entourant l'excentrique (4) exclusivement dans la première région partielle (24, 25) de l'excentrique (4).

10. Bielle selon la revendication 9, les parties de liaison (31, 32) comprenant une surface intérieure courbée (33, 34), laquelle est réalisée comme un segment d'arc de cercle et laquelle entoure la première région partielle (24, 25).

11. Bielle selon la revendication 10, la surface intérieure (33, 34) comportant une partie d'arc de cercle qui est réalisée au maximum sous forme semi-circulaire.

12. Bielle selon l'une des revendications 9 à 11, le levier d'excentrique (3) étant prévu de manière soudée sur l'excentrique (4) le long de la surface intérieure (33, 34).

13. Moteur à combustion interne doté d'au moins une bielle (1) selon l'une des revendications précédentes.
